# FASCICULE DE BREVET EUROPEEN

(11) **EP 3 365 226 B1**
(45) Date de publication et mention de la délivrance du brevet: **12.02.2020**
(21) Numéro de dépôt: 16806217.2
(22) Date de dépôt: 21.10.2016
(51) Int. Cl.: B64C 21/02, B64C 23/06, B64C 39/06

(54) **AERONEF A VOILURE FIXE ET A STABILITE STATIQUE ACCRUE**
STARRFLÜGELFLUGZEUG MIT EHÖHTER STATISCHER STABILITÄT
FIXED-WING AIRCRAFT WITH ENHANCED STATIC STABILITY

(30) Priorité: 22.10.2015 FR 1560067
(43) Date de publication de la demande: 29.08.2018
(73) Titulaire: Danielson Aircraft Systems, 58470 Magny Cours (FR)
(72) Inventeur: HUBSCHWERLEN, Frédéric, 58240 Saint-pierre-le-moutier (FR)
(74) Mandataire: Cabinet Laurent & Charras
(86) Numéro de dépôt international: PCT/FR2016/052720
(87) Numéro de publication internationale: WO 2017/068292

(56) Documents cités:
- WO-A1-03/000547
- FR-A1- 2 948 628
- US-A1- 2010 303 634
- US-B1- 8 657 226

## Description

### DOMAINE TECHNIQUE

La présente invention concerne le domaine technique des aéronefs à voilure fixe, tel qu'un avion ou un drone, et concerne plus particulièrement un aéronef à voilure fixe et à stabilité statique accrue.

Par drone on entend un aéronef sans pilote, communément appelé drone ou UAV selon l'acronyme anglo-saxon « *Unmanned Aerial Vehicle* » ou UAS selon l'acronyme anglo-saxon « *Unmanned Aerial System ».*

Par stabilité statique longitudinale, on entend la capacité de l'aéronef à contrer un mouvement perturbateur en tangage. En d'autres termes, si l'aéronef cabre ou pique sous l'effet d'une action perturbatrice, un couple inverse opposé doit s'exercer sur ledit aéronef visant à compenser le déplacement angulaire engendré par l'action perturbatrice et poussant l'aéronef à reprendre une position d'équilibre proche de la position initiale. La stabilité statique longitudinale est fortement souhaitable pour rendre l'aéronef pilotable.

### ART ANTERIEUR

Selon l'état de la technique, il est connu un aéronef à voilure fixe comprenant au moins une aile horizontale. D'une manière plus générale, un aéronef comprend deux ailes horizontales s'étendant latéralement de part et d'autre d'un fuselage central. L'aile ou les ailes horizontales peuvent constituer des surfaces portantes qui, seules, sont instables en tangage.

Dans une forme de réalisation particulière, l'aéronef comprend un empennage horizontal, constitué d'un ensemble de plans fixes et mobiles situés à l'arrière de l'aéronef, permettant de stabiliser l'aéronef.

Il est également connu de l'état de la technique de créer une stabilité statique artificielle par l'ajout de capteurs et d'un système électronique. Cependant, ce système est complexe et onéreux à mettre en œuvre de sorte qu'il est rarement utilisé.

La portance de l'aéronef est la force perpendiculaire à la direction d'avancement de l'aéronef qui s'exerce sur celui-ci pour le maintenir en vol.

La trainée de l'aéronef est la force parallèle à la direction d'avancement, et de direction opposée. Par convention, elle est divisée en deux composantes parallèles et de même sens : la trainée induite et la trainée parasite.

La trainée induite est la force parallèle à la direction d'avancement, et de direction opposée générée en corollaire à la portance.

La trainée parasite est la force parallèle à la direction d'avancement, et de direction opposée engendrée par le frottement de l'air sur l'aéronef, les variations de pression locales, les décollements et tourbillons divers....

A partir d'une certaine incidence de l'angle d'attaque de l'aile ou des ailes, l'aéronef subi une perte de portance. On parle alors de décrochage de l'aéronef. En général, le décrochage est généré pour un angle d'incidence de l'aile ou des ailes horizontales situé entre 15° et 18°. Ce phénomène limite fortement la portance qu'il est possible de générer pour une vitesse (une pression dynamique) et une surface donnée.

Afin de limiter ce phénomène de décrochage, il est par exemple connu d'augmenter la portance générée par l'aile ou les ailes horizontales, notamment par une technique de soufflage de l'aile ou des ailes avec des hélices ou des réacteurs.

Cependant, il a été constaté que lorsque ces solutions sont utilisées pour augmenter la portance d'une manière importante, elles peuvent entrainer une variation de l'angle induit par l'aile ou les ailes horizontales avec l'incidence ne permettant plus à l'empennage horizontal de réaliser sa fonction stabilisatrice.

Un autre problème réside dans les trainées induite et parasite par l'aéronef qui entraine notamment un gaspillage de puissance.

Pour pallier à ce problème, il est connu de prolonger chaque extrémité libre de l'aile ou des ailes horizontales avec une ailette formant un angle compris entre 0° et 45° par rapport à la verticale. Ces ailettes s'étendent ainsi vers le haut et sont bien connues de l'état de la technique sous le terme Anglo-saxon « Winglets ». Ces ailettes réduisent la traînée induite par la portance, sans augmenter l'envergure de l'aéronef. L'art antérieur reflétant cette approche est notamment illustré par les documents FR 2 948 628 A1 et WO 03/000547 A1.

De plus, dans le domaine des aéronefs tactiques à voilure fixe, ceux-ci présentent l'avantage d'être moins onéreux mais ils présentent l'inconvénient de nécessiter une piste de décollage et d'atterrissage relativement longue. Afin de pallier à cet inconvénient, on a déjà imaginé des dispositifs de lancement de ces aéronefs, tels que des rampes de décollage par exemple. De tels aéronefs sont, par exemple, décrits dans la demande internationale de brevet WO 2011/002331.

Le document WO 2011/002331 décrit un aéronef sans pilote de faibles dimensions, destiné à l'observation et la reconnaissance aériennes, lequel comprend une station de commande au sol, des moyens de radiocommunication, de navigation et de commande de vol embarqués et au sol, un dispositif de lancement, et un aéronef sans pilote démontable et portant une charge utile. L'aéronef possède une structure modulaire et peut être facilement assemblé pour le vol et démonté pour son transport dans un conteneur compact. Une plus grande simplicité et fiabilité structurelle de l'aéronef sans pilote, en même temps qu'une diminution de sa masse, peuvent être obtenues grâce à la structure originale du longeron central du fuselage et aux connexions de verrouillage à éléments d'arrêt permettant de fixer des parties d'aile au fuselage. L'aéronef sans pilote possède le schéma aérodynamique d'une aile volante avec une hélice propulsive et une installation d'alimentation électrique, et comprend un système de parachute pour l'atterrissage.

Toutefois, ce type d'aéronef présente l'inconvénient de présenter une faible autonomie en vol et ne permet pas d'embarquer une charge utile importante.

### EXPOSE DE L'INVENTION

L'un des buts de l'invention est donc de remédier à ces inconvénients en proposant un aéronef à voilure fixe qui présente une stabilité statique accrue dans des conditions de forte portance, tout en réduisant les trainées induite et parasite pour limiter le gaspillage de puissance dudit aéronef et augmenter son autonomie de vol.

Un autre objectif de l'invention est de fournir un tel aéronef, sans pilote, de conception simple et peu onéreuse, ayant un faible encombrement et la possibilité d'embarquer une charge utile importante tout en nécessitant une piste de décollage et d'atterrissage de faibles dimensions.

A cet effet, et conformément à l'invention, il est proposé un aéronef présentant au moins une aile, de préférence horizontale, comprenant, à chacune de ses extrémités, une ailette formant un angle compris entre 0° et 45° par rapport à la verticale, et de préférence compris entre 1° et 15° par rapport à la verticale.

Selon l'invention, chaque ailette comprend au moins un bec à fente situé en avant du bord d'attaque de l'ailette, ledit bec formant au moins une surface écartée du bord d'attaque de manière à ménager une fente entre le bec et le bord d'attaque. La fente ménagée le long du bord d'attaque est orientée pour faire circuler un flux d'air au travers de cette fente à partir d'une face externe de l'ailette jusqu'à une face interne de ladite ailette. Par face interne de l'ailette, on entend la face d'une ailette qui est en regard avec l'autre ailette.

De cette manière, les fentes longitudinales ménagées le long des bords d'attaque des ailettes permettent de générer une portance sur lesdites ailettes, dont l'évolution est stabilisatrice lors de l'augmentation de l'angle d'incidence de l'aile horizontale. En d'autres termes, le flux d'air qui circule dans les fentes génère une portance qui présente une composante verticale, et dont la variation avec l'incidence est stabilisatrice. En effet, la composante verticale de la portance générée par les fentes augmente avec l'incidence de l'aile horizontale. Contrairement à l'empennage horizontal, les ailettes ne sont pas perturbées par la variation de l'angle induit par l'aile horizontale.

Selon l'état de la technique, illustré par exemple par le document US 2010/0303634 A1, il est déjà connu de ménager des fentes longitudinales sur le bord d'attaque de l'aile horizontale, notamment pour repousser le décrochage de l'aile horizontale à un angle d'incidence plus élevé. Cependant, dans la configuration selon l'invention, il n'y a aucun intérêt à repousser le décrochage des ailettes. En effet, dans la présente invention les fentes ne sont pas utilisées pour repousser le décrochage en générant un effort perpendiculaire aux plans des ailettes, mais sont, en revanche, utilisées pour générer une portance à composante verticale, ce qui va à l'encontre de la pratique usuelle. En d'autres termes, les fentes ménagées le long des bords d'attaque des ailettes produisent un effet technique particulier et inattendu, différent de l'effet technique qu'elles produisent lorsqu'elles sont ménagées le long du bord d'attaque de l'aile horizontale.

De préférence, et pour augmenter la portance à composante verticale sur les ailettes et la stabilité statique, le bord d'attaque de chaque ailette comprend au moins deux fentes parallèles.

Avantageusement, le bec à fente est monté de manière rétractable pour obturer la fente et éviter de créer une trainée parasite supplémentaire qui gaspille de la puissance de l'aéronef.

Selon une autre forme de réalisation, chaque ailette comprend au moins un volet monté de manière mobile pour obturer la ou les fentes et éviter de créer la trainée parasite supplémentaire.

Avantageusement et pour stabiliser davantage l'aéronef, celui-ci comprend un fuselage et un empennage vertical.

Dans cette dernière forme de réalisation, et selon une forme de réalisation particulière, chaque ailette est reliée à l'empennage vertical du fuselage au moyen d'une portion d'aile.

Avantageusement, et pour augmenter la portance à composante verticale sur les ailettes lorsque l'angle d'incidence de l'aile horizontale augmente, chaque ailette est inclinée en direction de l'arrière dudit aéronef, de préférence, selon un angle compris entre 45° et 65° par rapport à la verticale, et de préférence selon un angle de 55° par rapport à la verticale.

### DESCRIPTION SOMMAIRE DES FIGURES

D'autres caractéristiques et avantages de l'invention ressortiront clairement de la description qui en est réalisée ci-après, à titre indicatif et nullement limitatif, en référence aux figures annexées dans lesquelles :
- la figure 1 est une vue en perspective d'un l'aéronef muni d'ailettes à fentes,
- la figure 2 est une vue de détail de l'ailette verticale de l'aéronef, vue du côté intérieur, ladite ailette comprenant deux fentes le long de son bord d'attaque,

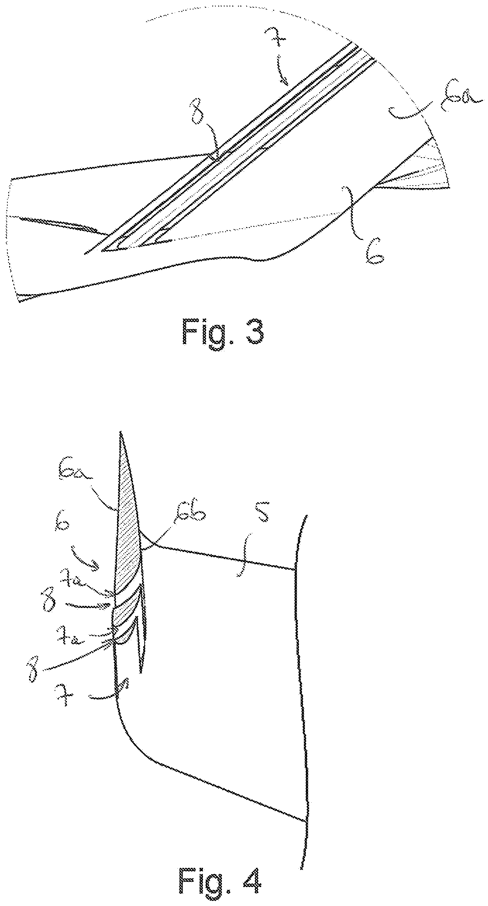

- la figure 3 est une vue similaire à celle de la figure 2, l'ailette étant vue du côté extérieur,
- la figure 4 est une vue similaire à celle de la figure 2, l'ailette étant vue de dessus et en coupe transversale,
- la figure 5 est une vue similaire à celle de la figure 4, illustrant un mode de réalisation de l'invention, l'ailette comprenant un bec rétractable à simple fente,
- la figure 6 est une vue de détail sur de l'ailette selon le mode de réalisation de la figure 5, vue du côté intérieur avec le bec rétractable en position ouverte,
- la figure 7 est une vue similaire à celle de la figure 6, le bec rétractable étant en position fermée.

### DESCRIPTION DETAILLEE DE L'INVENTION

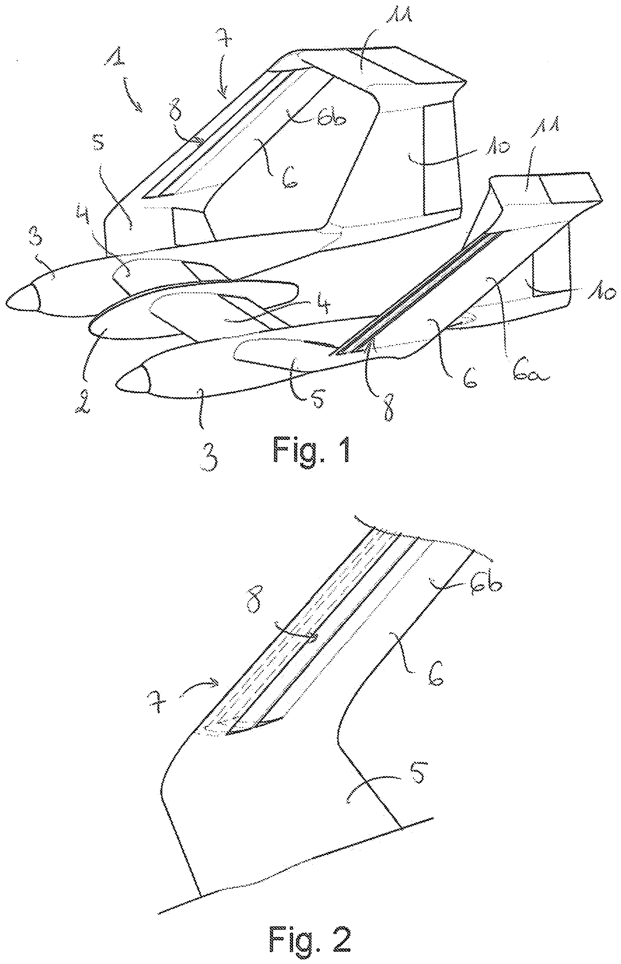

En référence à la figure 1, l'invention est décrite en relation avec un aéronef (1) sans pilote, communément appelé drone, constitué d'un fuselage central (2) et deux fuselages latéraux (3) s'étendant parallèlement au fuselage central (2), et portant respectivement, de préférence, un moyen de propulsion (non représenté). Lesdits fuselages latéraux (3) sont connectés au fuselage central (2) par une aile (4) inclinée d'avant en arrière. Le fuselage central (2) présente une longueur inférieure à la longueur des fuselages latéraux (3).

Par ailleurs, l'aéronef (1) comporte également deux ailes sensiblement horizontales (5) s'étendant latéralement depuis lesdits fuselages latéraux (3). On notera que l'aéronef (1) pourra ne pas comporter de fuselage central (2) sans pour autant sortir du cadre de l'invention.

Chaque moyen de propulsion consiste en un moteur, non représenté sur les figures, entrainant une hélice (non représentée) positionnée à l'avant de chaque fuselage latéral (3). Par ailleurs, l'axe de chaque hélice forme par exemple un angle, dans le plan vertical, avec le plan des ailes horizontales (4) et/ou lesdites ailes horizontales (4) comportent des volets à simple ou double ou triple fente afin de procurer une aile dite soufflée. Ainsi, les hélices soufflent directement la quasi-totalité des ailes et augmentent fortement la portance dans cette zone.

De cette manière, l'aéronef (1) illustré présente un coefficient de portance très élevé permettant un décollage sur une courte distance, par exemple de l'ordre de 90 mètres.

De plus, chaque aile latérale horizontale (5) comprend, à son extrémité libre, une ailette (6) s'étendant vers le haut et définissant notamment un angle compris entre 0° et 45°, et de préférence entre 1° et 15° par rapport à la verticale. Chaque ailette (6) est, par exemple, inclinée vers l'arrière de l'aéronef (1) selon un angle compris entre 45° et 65°, et de préférence de 55° par rapport à la verticale.

Chaque ailette (6) comprend un bord d'attaque (7) qui comprend au moins une fente (8) ménagée le long dudit bord d'attaque (7) et orientée pour faire circuler un flux d'air au travers dudit bord d'attaque (7) à partir d'une face externe (6a) de l'ailette (6) jusqu'à une face interne (6b). Chaque ailette (6) selon l'illustration comprend deux fentes (8) dites longitudinales parallèles.

De cette manière, le passage d'un flux d'air au travers desdites fentes (8) permet de générer une portance sur les ailettes (6) qui présente une composante verticale qui augmente avec l'incidence des ailes horizontales (4, 5). Cette portance supplémentaire permet de stabiliser l'aéronef (1) et d'augmenter l'angle auquel décrochent les ailes horizontales (4, 5). Par ailleurs, la section transversale des fentes (8) est avantageusement concave, de manière à ce que lesdites fentes (8) définissent un bord d'attaque supplémentaire (7a), bombé et forment un profil d'aile pour générer la portance lors de l'écoulement du flux d'air.

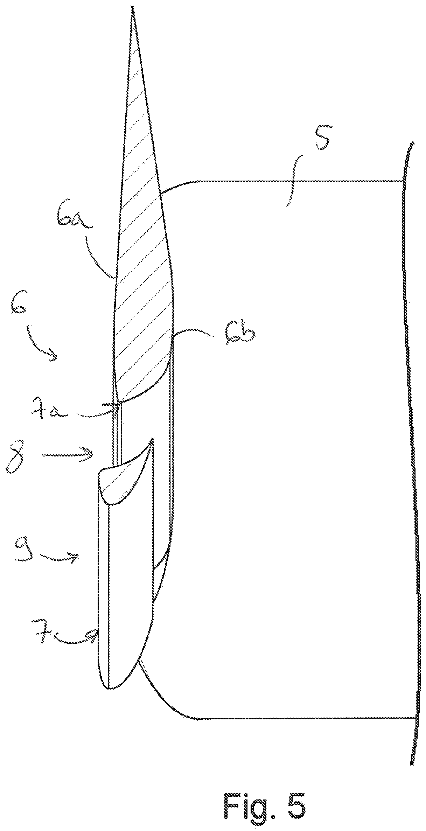

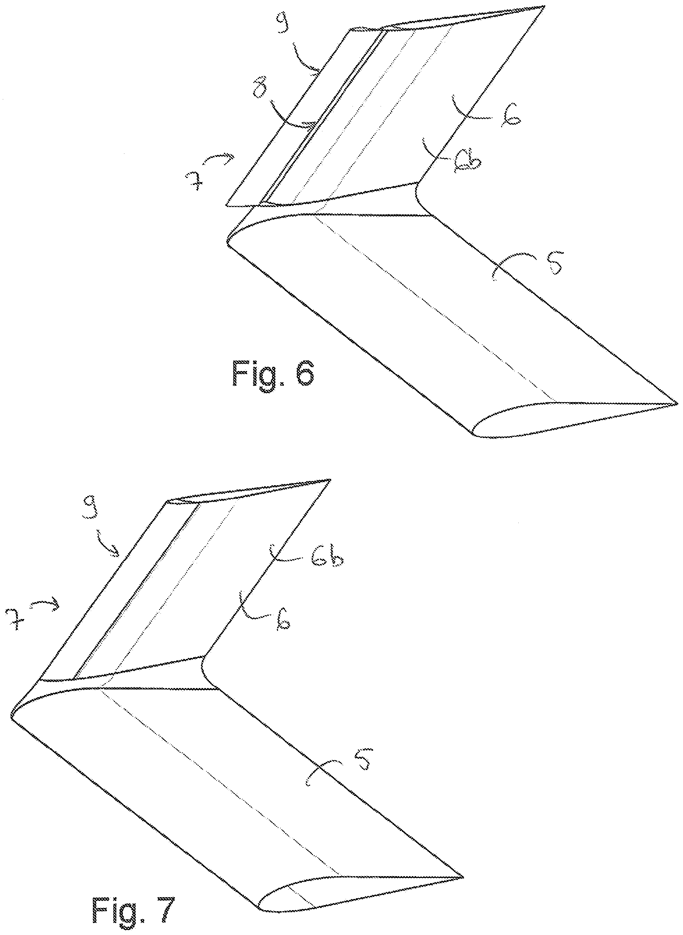

Selon une forme de réalisation illustrée aux figures 5 à 7, chaque ailette (6) comprend un bec (9) à fente fixe situé en avant du bord d'attaque (7). Le bec (9) à fente fixe forme au moins une surface fixe écartée du bord d'attaque (7) de l'ailette (6), de manière à ménager une fente (8) entre ladite surface fixe et le bord d'attaque (7). Le bec (9) est monté de manière rétractable pour passer d'une position d'obturation à une position de libération de la fente (8), et éviter de créer une trainée parasite supplémentaire qui gaspille de la puissance de l'aéronef (1). Il est également possible de réaliser cette fonction par l'intermédiaire d'un volet monté pivotant sur chaque ailette (6) entre une position d'obturation et une position de libération des fentes (8).

Tel qu'illustré à la figure 1, les deux fuselages latéraux (3) comprennent chacun un empennage vertical (10) et chaque ailette (6) est reliée à l'empennage vertical (10) du fuselage latéral (3) correspondant au moyen d'une portion d'aile (11), s'étendant de préférence sensiblement parallèlement aux ailes horizontales (4). Cette portion d'aile (11) s'étend d'avant en arrière en formant un angle avec le plan frontal de l'aéronef (1). Dans cet exemple, le rapport entre la hauteur des ailettes (6) et l'envergure de l'aéronef (1) est compris entre 0,15 et 0,25, et de préférence égal à 0,2. On entend par envergure la distance séparant les extrémités des deux ailes latérales horizontales (5).

L'essentiel de l'invention réside dans la présence de becs à fentes situés en avant du bord d'attaque des ailettes (6) s'étendant vers le haut agencées aux extrémités des ailes latérales (5) de l'aéronef (1). Par exemple, de simples « winglets » (terme Anglo-saxon bien connu de l'Homme du Métier) avec des becs (9) à fentes rentrent dans le cadre de la présente invention.

De plus, il est bien évident que les moteurs entrainant les hélices sont de tout type approprié, tels que de préférence des moteurs thermiques alimentés en carburant stocké dans des réservoirs positionnés dans les fuselages latéraux (3) et les ailes horizontales (4, 5), ou bien des moteurs électriques sans pour autant sortir du cadre de l'invention.

Enfin, il est bien évident que les exemples que l'on vient de donner ne sont que des illustrations particulières et en aucun cas limitatifs quant au domaine d'application de l'invention.

## Revendications

1. Aéronef (1) présentant au moins une aile (5) comprenant, à chacune de ses extrémités, une ailette (6) formant un angle compris entre 0° et 45° par rapport à la verticale, ***caractérisé* en ce que** chaque ailette (6) présente un bord d'attaque (7), et comprend un bec (9) à fente situé en avant du bord d'attaque (7), ledit bec (9) formant une surface écartée du bord d'attaque (7) de manière à ménager une fente (8) entre le bec (9) et le bord d'attaque (7), ladite fente (8) ménagée le long du bord d'attaque (7) étant orientée pour faire circuler un flux d'air au travers de ladite fente (8) à partir d'une face externe (6a) de l'ailette (6) jusqu'à une face interne (6b) de ladite ailette (6).

2. Aéronef (1) selon la revendication 1, ***caractérisé* en ce que** le bord d'attaque (7) de chaque ailette (6) comprend au moins deux fentes (8) parallèles.

3. Aéronef (1) selon la revendication 1, ***caractérisé* en ce que** le bec à fente (9) est monté de manière rétractable pour obturer la fente (8).

4. Aéronef (1) selon l'une quelconque des revendications 1 à 2, ***caractérisé* en ce que** chaque ailette (6) comprend au moins un volet monté de manière mobile pour obturer la ou les fentes (8).

5. Aéronef (1) selon l'une quelconque des revendications 1 à 4, ***caractérisé* en ce qu'**il comprend au moins un fuselage (3) et un empennage vertical (10).

6. Aéronef (1) selon la revendication 5, ***caractérisé* en ce que** chaque ailette (6) est reliée à l'empennage vertical (10) du fuselage (3) au moyen d'une portion d'aile (11).

7. Aéronef (1) selon l'une quelconque des revendications 1 à 6, ***caractérisé* en ce que** chaque ailette (6) est inclinée en direction de l'arrière dudit aéronef (1).

8. Aéronef (1) selon la revendication 7, ***caractérisé* en ce que** chaque ailette (6) est inclinée vers l'arrière de l'aéronef (1) selon un angle compris entre 45° et 65° par rapport à la verticale.

## Patentansprüche

1. Flugzeug (1) mit mindestens einem Flügel (5), der an jedem seiner Enden ein Winglet (6) aufweist, das einen Winkel zwischen 0° und 45° mit der Senkrechten bildet, ***dadurch gekennzeichnet*, daß** jedes Winglet (6) eine Vorderkante (7) und einen vor der Vorderkante (7) angeordneten Vorflügel (9) aufweist, wobei die Lamelle (9) eine von der Vorderkante (7) getrennte Fläche bildet, um einen Schlitz (8) zwischen der Lamelle (9) und der Vorderkante (7) zu platzieren, wobei der entlang der Vorderkante (7) platzierte Schlitz (8) so ausgerichtet ist, dass ein Luftstrom durch den Schlitz (8) von einer Außenfläche (6a) des Winglets (6) zu einer Innenfläche (6b) des Winglets (6) zirkuliert.

2. Das Flugzeug (1) nach Anspruch 1, ***dadurch gekennzeichnet*, dass** die Vorderkante (7) jedes Winglets (6) mindestens zwei parallele Schlitze (8) aufweist.

3. Das Flugzeug (1) nach Anspruch 1, ***dadurch gekennzeichnet*, dass** die Vorflügel (9) einziehbar installiert sind, um den Schlitz (8) zu blockieren.

4. Das Flugzeug (1) nach einem der Ansprüche 1 bis 2, ***dadurch gekennzeichnet*, dass** jedes Winglet (6) mindestens eine Klappe aufweist, die beweglich montiert ist, um den oder die Schlitze (8) zu blockieren.

5. Das Flugzeug (1) nach einem der Ansprüche 1 bis 4, ***dadurch gekennzeichnet*, dass** es mindestens einen Rumpf (3) und ein Seitenleitwerk (10) aufweist.

6. Das Flugzeug (1) nach Anspruch 5, ***dadurch gekennzeichnet*, dass** jedes Winglet (6) mit dem Höhenleitwerk (10) des Rumpfes (3) über einen Flügelabschnitt (11) verbunden ist.

7. Das Flugzeug (1) nach einem der Ansprüche 1 bis 6, ***dadurch gekennzeichnet*, dass** jedes Winglet (6) zum Heck des Flugzeugs (1) hingeneigt ist.

8. Das Flugzeug (1) nach Anspruch 7, ***dadurch gekennzeichnet*, dass** jedes Winglet (6) zum Heck des Flugzeugs (1) in einem Winkel zwischen 45° und 65° relativ zur Vertikalen geneigt ist.

## Claims

1. An aircraft (1) having at least one wing (5) comprising, at each of the ends thereof, a winglet (6) forming an angle of between 0° and 45° relative to the vertical, ***characterized* in that** each winglet (6) has a leading edge (7), and a slat (9) situated in front of the leading edge (7), said slat (9) forming a surface separated from the leading edge (7) so as to place a slot (8) between said slat (9) and the leading edge (7), said slot (8) placed along said leading edge (7)being oriented so as to make an airflow circulate through said slot (8) from an outer surface (6a) of the winglet (6) to an inner surface (6b) of said winglet (6).

2. The aircraft (1) according to claim 1, ***characterized* in that** the leading edge (7) of each winglet (6) comprises at least two parallel slots (8).

3. The aircraft (1) according to claim 1, ***characterized* in that** the slat (9) is installed retractably in order to block the slot (8).

4. The aircraft (1) according to any one of claims 1 to 2, ***characterized* in that** each winglet (6) comprises at least one flap mounted movably in order to block the slot or slots (8).

5. The aircraft (1) according to any one of claims 1 to 4, ***characterized* in that** it comprises at least one fuselage (3) and one vertical stabilizer (10).

6. The aircraft (1) according to claim 5, ***characterized* in that** each winglet (6) is connected to the vertical stabilizer (10) of the fuselage (3) by means of a wing portion (11).

7. The aircraft (1) according to any one of claims 1 to 6, ***characterized* in that** each winglet (6) is inclined towards the rear of said aircraft (1).

8. The aircraft (1) according to claim 7, ***characterized* in that** each winglet (6) is inclined towards the rear of the aircraft (1) at an angle of between 45° and 65° relative to the vertical.
